(19) Europäisches Patentamt
European Patent Office
Office européen des brevets

(11) Veröffentlichungsnummer: **0 200 678**
**B1**

(12) **EUROPÄISCHE PATENTSCHRIFT**

(45) Veröffentlichungstag der Patentschrift: **12.09.90**

(51) Int. Cl.[5]: **C 08 G 59/18**, C 08 G 59/68, C 08 G 59/40

(21) Anmeldenummer: **86810153.6**

(22) Anmeldetag: **27.03.86**

# (54) Verfahren zum Verkleben von Oberflächen mit einem härtbaren Epoxidharzgemisch.

(30) Priorität: **02.04.85 GB 8508628**

(43) Veröffentlichungstag der Anmeldung:
**05.11.86 Patentblatt 86/45**

(45) Bekanntmachung des Hinweises auf die Patenterteilung:
**12.09.90 Patentblatt 90/37**

(84) Benannte Vertragsstaaten:
**AT CH DE FR GB IT LI NL SE**

(56) Entgegenhaltungen:
**FR-A-2 541 295**
**US-A-3 519 576**
**US-A-3 520 905**

(73) Patentinhaber: **CIBA-GEIGY AG**
**Klybeckstrasse 141**
**CH-4002 Basel (CH)**

(72) Erfinder: **Bagga, Madan Mohan, Dr.**
**56, Hurrell Road**
**Cambridge CB4 3RH (GB)**
Erfinder: **Bull, Christopher Hubert**
**135 Shelford Road**
**Trumpington Cambridge CB2 2ND (GB)**

**EP 0 200 678 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die vorliegende Erfindung betrifft ein Verfahren zum Verkleben zweier Oberflächen mit einem bestimmten härtbaren Epoxidharzgemisch.

Die Verwendung von Epoxidharzen als Klebstoffe und Beschichtungsmittel ist seit langem bekannt. Viele Epoxidharzhärtungsmittel sind bei Raumtemperatur reaktiv und können somit erst kurz vor der Anwendung mit dem Epoxidharz vermischt werden. Andere Härter, die im Gemisch mit Epoxidharzen bei Raumtemperatur unreaktiv sind und zu härten beginnen, wenn das Gemisch über eine bestimmte Schwellentemperatur erhitzt wird, werden als latente Härtungsmittel bezeichnet. Solche Härter sind bekannt und im Handel erhältlich und umfassen chemisch verschiedene Verbindungsklassen, wie Polycarbonsäurehydrazide, Aminotriazine, Bortrifluoridkomplexe, Komlexe aus Bortrichlorid und tertiären Aminen, Polyphenole, Polycarbonsäuren, Dicyandiamid, Imidazole und organische Metallverbindungen.

Zum Härten eines ein Epoxidharz und einen latenten Härter enthaltenden Gemisches werden im allgemeinen 15 Minuten bis 1 Stunde bei 180°C benötigt. Die Härtungszeit kann durch Zugabe eines Beschleunigers, der die Lagerstabilität des härtbaren Gemisches wenig verändert, verkürst werden. Wenn Dicyandiamid als Härter eingesetzt wird, kann beispielsweise als Beschleuniger ein substituierter Phenylharnstoff, wie N-(4-Chlorphenyl)-N,N'-dimethylharnstoff, eingesetzt werden. Eine schnellere Härtung kann auch durch Anwendung höherer Härungstemperaturen, wie etwa 200°C, erreicht werden, wobei bei Verwendung dieses Beschleunigertyps flüchtige Dämpfe entstehen, die im härtbaren Gemisch Blasenbildung verursachen. Die Gegenwart von Blasen in einer Klebschicht stellt einen schweren Nachteil dar, weil mit einer solchen Klebschicht eine schwächere Bindung erreicht wird. Analog können mit einem Blasen enthaltenden Gemisch nur ungenügende Beschichtungen oder Laminate erhalten werden. In der Praxis wird daher ein solches Gemisch unterhalb von 150°C ausgehärtet, wobei ein längere Härtungszeit in Kauf genommen werden muss.

Bestrebungen in der Automobilindustrie, das Punktschweissen von einigen Teilen durch Verklebungen zu ersetzen, erfordern Klebstoffe, die bei hohen Temperaturen innerhalb weniger Sekunden sich verfestigen und Verklebungen mit hoher Scherfestigkeit ergeben. Zur Aufrechterhaltung der Produktionsgeschwindigkeit ist es wichtig, dass die zu verbindenden Teile schnell erhitzt werden können. Mittels der Induktionsheizung werden in wenigen Sekunden hohe Temperaturen erreicht. Eine genaue Temperaturkontrolle wird aber durch geometrisch unterschiedliche Teile erschwert. Beschleuniger, welche bei hohen Temperaturen Blasenbildung verursachen, sind daher für solche Anwendungen ungeeignet.

Epoxidharze ergeben Verklebungen mit hoher Festigkeit und sind daher für Anwendungen in der Automobilindustrie geeignet. Die gebräuchlichen Epoxidharzformulierungen weisen aber folgende Nachteile auf: Ungenügende Lagerstabilität bei Raumtemperatur, ungenügende Härtungsgeschwindigkeit beim Erhitzen sowie Bildung von Blasen bei hohen Härtungstemperaturen. Es wurde num gefunden, dass man diese Nachteile überwinden kann, indem man ein härtbares Epoxidharzgemisch verwendet, enthaltend ein Stickstoff enthaltendes latentes Härtungsmittel, insbesondere eines, das Amino-, Imino-, Amido-, Imido-, Tirazin- oder Hydrazidgruppen aufweist, und als Beschleuniger eine feste Lösung aus einem phenolischen Polymer und einer hochsiedenden basischen Stickstoffverbindung.

Die Verwendung von Phenol-Aminsalzen als latente Härtungsmittel für Epoxidharze ist beispielsweise aus den US-Patenten 3 519 576 und 3 520 905 bekannt, worin kristalline Polyphenolatsalze aus Polyaminen und Polyphenolen beschrieben werden. Die Verwendung der Salze als Beschleuniger bei der Härtung von Epoxidharzen wird in den genannten US-Patenten nicht offenbart.

In den japanischen Offenlegungsschriften 60—4521 und 60—4523 werden Isoliermassen beschrieben, die einen hitzeleitfähigen Füllstoff, ein Epoxidharz, Dicyandiamid als Härter und als Beschleuniger ein tertiäres Amninsalz eines mehrwertigen Phenols oder einer mehrwertigen Säure enthalten. In der japanischen Offenlegungsschrift 60—4522 werden ähnliche Isoliermassen beschrieben, in welchen der Härter ein mehrweitiges Phenol, eine Polycarbonsäure oder ein aromatisches Polyamin ist, wobei die Phenolkomponente im Aminsalz niedermolekular ist.

Die vorliegende Erfindung betrifft ein Verfahren zum Verkleben zweier Oberflächen aus Metall, verstärktem Kunststoff, Glas, Reibungsmaterial, wie Bremsbelege, oder Keramik, dadurch gekennzeichnet, dass man

(1) auf eine oder beide Oberflächen ein härtbares Gemisch aufbringt, das enthält

(a) ein Epoxidharz,

(b) ein Stickstoff enthaltendes latentes Härtungsmittel für Epoxidharz und

(c) als Härtungsbeschleuniger eine feste Lösung aus einer Stickstoffbase mit einem Siedepunkt von über 130°C und einem phenolischen Polymer, welches ein Kondensationsprodukt aus einem Phenol und einem Aldehyd ist, wobei die feste Lösung als Pulver in der Mischung aus (a) und (b) dispergiert vorliegt,

(2) die beiden Oberflächen so aneinanderfügt, dass has härtbare Gemisch dazwischen liegt und ein Gebilde ergibt, und

(3) das Gebilde erhitzt, bis das härtbare Gemisch sich verfestigt hat.

Der Ausdruck "feste Lösung" bezüglich des Härtungsbeschleunigers (c) steht für die Kombination der Stickstoffbase mit dem phenolischen Polymer in einem festen Einphasen-System. Es ist möglich, dass zwischen den beiden Komponenten etwas Salzbildung vorhanden ist. Auch ist es möglich, dass zwischen beiden Komponenten eine Wasserstoffbrückenbindung vorliegt. Die festen Lösungen werden gewöhnlich

nicht unter Verwendung von stöchiometrischen Mengen hergestellt, so dass eine Komponente im Ueberschuss vorliegt. Der Ausdruck "feste Lösung" umfasst alle Produkte, ob sie nun Salz zwischen der Base und dem phenolischen Polymer oder eine Komponente im Ueberschuss enthalten.

Als Epoxidharze (a) werden in den einzusetzenden Gemischen bevorzugt solche verwendet, die mindestens zwei direkt an Sauerstoff-, Stickstoff- oder Schwefelatome gebundene Gruppen der Formel I

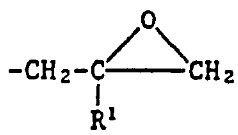 (I)

enthalten, wobei $R^1$ ein Wasserstoffatom oder eine Methylgruppe darstellt.

Als Beispiele von solchen Harzen seien genannt: Polyglycidyl- und Poly(β-methylglycidyl)ester, erhältlich durch Umsetzung von Verbindung mit zwei oder mehr Carbonsäuregruppen pro Molekül mit Epichlorhydrin, Glycerindichlorhydrin oder β-Methylepichlorhydrin in Gegenwart von Alkali. Solche Polyglycidylester können von aliphatischen Polycarbonsäuren, z.B. Oxalsäure, Bernsteinsäure, Glutarsäure, Adipinsäure, Pimelinsäure, Suberinsäure, Azelainsäure, Sebacinsäure, dimersisierter oder trimerisierter Linolsäure, von cycloaliphatischen Polycarbonsäure, wie Tetrahydrophthalsäure, 4-Methyltetrahydrophthalsäure, Hexahydrophthalsäure, und 4-Methylhexahydrophthalsäure, oder von aromatische Polycarbonsäuren, wie Phthalsäure, Isophthalsäure und Terephthalsäure, abgeleitet sein.

Weitere Beispiele sind Polyglycidyl- und Poly(β-methylglycidyl)ether, erhältlich durch Umsetzung von Verbindungen mit mindestens zwei freien alkoholischen Hydroxylgruppen und/oder phenolischen Hydroxylgruppen pro Molekül mit geeigneten Epichlorhydrinen unter alkalischen Bedingungen oder aber in Gegenwart von sauren Katalysatoren, gefolgt von einer Behandlung mit Alkali. solche Ether können aus acyclischen Alkoholen, wie Ethylenglykol, Diethylenglykol und höheren Poly(oxyethylen)glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen, von cycloaliphatischen Alkoholen, wie 1,3- und 1,4-Cyclohexandiol, Bis(4-hydroxycyclohexyl)methan, 2,2-Bis-(4-hydroxycyclohexyl)propan und 1,1-Bis-(hydroxymethyl)-cyclohex-3-en, sowie von Alkoholen mit aromatischen Kernen, wie N,N-Bis-(2-hydroxyethyl)anilin und p,p'-Bis-(2-hydroxymethylamino)diphenylmethan, abgeleitet sein. Sie können sich auch von einkernigen Phenolen, wie Resorcin und Hydrochinon, und von mehrkernigen Phenolen, wie Bis-(4-hydroxyphenyl)methan, 4,4''-Dihydroxydiphenyl, Bis-(4-hydroxyphenyl)sulfon, 1,1,2,2-Tetrakis-(4-hydroxyphenyl)ethan, 2,2-Bis-(4-hydroxyphenyl)propan, 2,2-Bis-(3,5-dibrom-4-hydroxyphenyl)propan und Novolaken aus Aldehyden, wie Formaldehyd, Acetaldehyd, Chloral und Furfurylaldehyd, und Phenolen, wie dem unsubstituierten Phenol und Phenolen, die im Ring durch Chloratome oder alkylgruppen mit bis zu 9 C-Atomen substituiert sind, wie 4-Chlorphenol, 2-Methylphenol und 4-tert.-Butylphenol, ableiten.

Beispiele von Poly(N-glycidyl)verbindungen sind Verbindungen, die durch Dehydrochlorierung von Umsetzungsprodukten aus Epichlorhydrin und Aminen mit mindestens zwei Aminwasserstoffatomen erhalten werden, wie Anilin, N-Butylamin, Bis-(4-aminophenyl)methan, m-Xylylendiamin und Bis-(4-methylaminophenyl)methan; Triglycidylisocyanurat und N,N'-Diglycidylderivate von cyclischen Alkylenharnstoffen, wie Ethylenharnstoff und 1,3-Propylenharnstoff, wie Hydantoine, wie 5,5-Dimethylhydantoin.

Beispiele von Poly(S-glycidyl)verbindungen sind die S-Glycidylderivate von Dithiolen, wie Ethan-1,2-dithiol und Bis-(4-mercaptomethylphenyl)ether.

Es können auch Epoxidharze verwendet werden, bei denen die 1,2-Epoxidgruppen an verschiedene Heteroatome gebunden sind, z.B. das N,N,O-Triglycidylderivat von 4-Aminophenol, der Glycidyletherglycidylester von Salicylsäure, N-Glycidyl-N'-(2-glycidyloxypropyl)-5,5-dimethylhydantoin und 2-Glycidyloxy-1,3-bis(5,5-dimethyl-1-glycidylhydantoin-3-yl)propan.

Gewünschtenfalls können auch Gemische verschiedener Epoxidharze verwendet werden.

Bevorzugte Epoxidharze sind Polyglycidylether, Polyglycidylester, N,N'-Diglycidylhydantoine und Poly(N-glycidyl)derivate von aromatischen Aminen. Besonders bevorzugte Harz sind Polyglycidylether von 2,2-Bis-(4-hydroxyphenyl)propan oder Bis-(4-hydroxyphenyl)methan, sowie Polyglycidylether von Novolaken aus Formaldehyd und Phenol oder Phenolen, die im Ring durch ein Chloratom oder eine Alkylgruppe mit bis zu 9 C-Atomen substituiert sind, mit einem 1,2-Epoxidgehalt von mindestens 0,5 Aequivalenten/kg, Bis-[4-(diglycidylamino)phenyl]methan und p-(Diglycidylamino)phenylglycidylether.

Das Stickstoff enthaltende Härtungsmittel (b) in den erfindungsgemässen Gemischen kann jede Substanz sein, die gegenüber Epoxidharze unterhalb der sogenannten Schwellentemperatur inert, ist, die gewöhnlich bei 80°C, vorzugsweise 100°C oder darüber, liegt, aber oberhalb der Schwellentemperatur schnell mit dem Epoxidharz reagiert und die Härtung bewirkt. Solche Substanzen sind bekannt und im Handel erhältlich, wie beispielsweise Bortrifluorid-Amin- und Bortrichlorid-Amin-Komplexe, Dicyandiamin, Melamin, Diallylmelamin, Guanamine, wie Acetoguanamin und Benzoguanamin, Aminotriazole, wie 3-Amino-1,2,4-triazol, hydrazide, wie Adipinsäuredihydrazid, Stearinsäuredihydrazid, Isophthalsäuredihydrazid, Semicarbazide, Cyanacetamid und aromatische Polyamine, wie Diaminodiphenylsulfone. Die

Verwendung von Dicyandiamid, Isophthalsäuredihydrazid, Adipinsäuredihydrazid und 4,4'-Diaminodiphenylsulfon ist besonders bevorzugt.

Die feste Lösung (c) die in den einzusetzenden Gemischen als Beschleuniger verwendet wird, wird vor dem Beimischem zum Harz (a) und Härtungsmittel (b) separat hergestellt und gepulvert. Wird dagegen versucht, die feste Lösung (c) in situ in der Epoxidharzmischung herzustellen, wird keine lagerstabile Epoxidharzmischung erhalten.

Das phenolische Polymer, das zue Herstellung der festen Lösung (c) verwendet wird, enthält mehr als zwei wiederkehrende Einheiten mit mindestens einer phenolischen Hydroxygruppe pro Einheit. Solche Polymere können durch Kondensation eines monomeren Phenols mit einem Aldehyd hergestellt werden. Typische Kondensationspolymere sind beispielsweise die Novolake, hergestellt aus einem Phenol, einschliesslich einwertigem Phenol, wie Phenol selbst, alkyl-, alkoxy- oder halogensubstituiertes Phenol oder aus zweiwertigen Phenolen, wie Resorcin oder Bisphenol a. Die bevorzugten Phenole sind Phenol, p-tert. Butylphenol und Bisphenol A, kondensiert mit einem Aldehyd, wie Furfurylaldehyd, Chloral, Acetaldehyd oder vorzugsweise Formaldehyd. Solche Novolake entsprechen vorzugsweise der allgemeinen Formel II

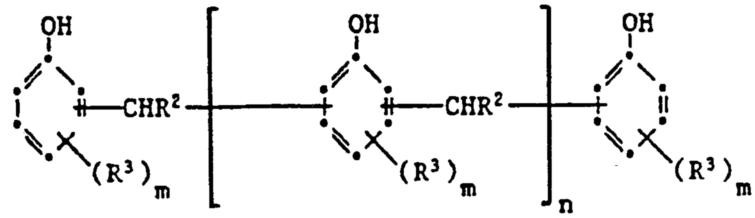

(II),

worin

$R^2$ ein Wassestoffatom, Alkyl, Aryl oder einen Heterocyclus bedeutet,

$R^3$ ein Halogenatom, Hydroxyl, Alkyl, Alkoxy, Aryl, Aralkyl oder Hydroxyaralkyl bedeutet,

m für Null oder eine Zahl von 1 bis 3 steht und

n eine solche Zahl darstellt, dass der Durchschnittswert zwischen 1 und 15 liegt.

Bevorzugte phenolische Polymere der Formel II sind solche, worin $R^2$ ein Wasserstoffatom beduetet, $R^3$ ein Alkyl oder ein Hydroxyalkyl bedeutet und m für Null oder die Zahl 1 steht, und insbesondere solche, die aus Phenol, einem Kresol, p-tert-Butylphenol oder Bisphenol A und Formaldehyd hergestellt worden sind.

Die Stickstoffbasen, die zur Herstellung der festen Lösungen (c) verwendet werden, können primäre, sekundäre oder tertiäre Amine oder basische, Stickstoff enthaltende Heterocyclen, wie Imidazole, sein. Geeignete Basen sind beispielsweise tertiäre Monoamine, sekundäre Monoamine, primäre, sekundäre oder tertiäre Diamine, tertiäre Triamine, gemischte Polyamine und N-Heterocyclen. Beispiele von geeigneten Basen mit einem Siedepunkt über 130°C unter Normaldruck sind tertiäre Monoamine, wie 2-(N,N-Dimethylamino)-ethanol, sekundäre Monoamine, wie Di-isobutylamin, primäre Diamine, wie 1,3-Diaminopropan und 1,3-Diaminobutan, sekundäre Diamine, wie Piperazin, gemischte Polyamine, wie 3-(Dimethylamino)-propylamin, und N-Heterocyclen, wie 3-Methylpyridin oder 4-Methylpyridin.

Bevorzugte Basen sich solche, die einen Siedepunkt von über 150°C unter normaldruck aufweisen. Beispiele von solche bevorzugten Basen sind tertiäre Monoamine, wie Tri-n-butylamin, Tri-isobutylamin, Octyldimethylamin, Benzyldimethylamin, Tri-n-propylamin, Trihexylamin, N,N-Diethylcyclohexylamin, 2-(Diethylamino)-ethanol, 3-(Dimethylamino)-1-propanol und 2-(Dimethylaminomethyl)-phenol; sekundäre Monoamine, wie 2-(Methylamino)-ethanol, Di-n-amylamin und Di-isoamylamin; primäre Diamine, wie Isophorondiamin (3-Aminoethyl-3,5,5-trimethylcyclohexylamin), 1,4-Diaminobutan, 1,5-Diaminopentan und Hexamethylendiamin; sekundäre Diamine, wie N,N'-Diethylethylendiamin; tertiäre Diamine, wie N,N,N',N'-Tetramethylbutandiamin, 1,7-Bis-(dimethylamino))-heptan und Bis-(4-dimethylaminophenyl)-methan; tertiäre Triamine, wie 2,4,6-Tris-(dimethylaminomethyl)-phenol; gemischte Polyamine, wie Triethylentetramin, Tetraethylenpentamin, Diethylentriamin, 3-(Diethylamino)-propylamin und N-(2-Aminoethyl)piperazin; und N-Heterocyclen, wie 1-Methylimidazol, 2-Methylimidazol, Benzimidazol, 2-Phenylimidazol und Chinolin.

Besonders bevorzugte Basen sind Benzyldimethylamin, 2,4,6-Tris-(dimethylaminomethyl)-phenol, Octyldimethylamin, Triethylentetramin, Isophorondiamin, 2-(Methylamino)-ethanol, 2-Methylimidazol, Benzimidazol, 2-Phenylimidazol, 1-Methylimidazol, 3-(Dimethylamino)-1-propanol und N-(2-Aminoethyl)-piperazine.

Die festen Lösungen (c) können hergestellt werden, indem man das phenolische Polymer zusammen mit der Stickstoffbase erhitzt, entweder in Abwesenheit eines Lösungsmittels oder in einem niederen Alkohol, besonders Methanol, bis eine klaire Lösung entstanden ist und dann das Lösungsmittel entfernt. Gewöhnlich ist keine weitere Reinigung erforderlich. Das Gewichtsverhältnis von Polymer zur Stickstoffbase ist so zu wählen, dass ein festes, stabiles Produkt erhalten wird und beträgt im allgemeinen 0,8—4,0:1, insbesondere 1,0—3,0:1. Da keine stöchiometrischen Verhältnisse vorliegen, wird ein Gemisch von Produkten erhalten.

Die Menge des latenten Härtungsmittels (b), die in dem erfindungsgemässen Verfahren eingesetzt

wird, ist nicht kritisch und beträgt übliche Mengen, die zum Härten des Epoxidharzes eingesetzt werden. Im allgemeinen beträgt die Menge des latenten Härtungsmittels 1 bis 30 Gewichtsteile, insbesondere 5 bis 10 Gewichtsteile, pro 100 Gewichtsteile Epoxidharz (a).

Die Menge des verwendeten Härtungsbeschleunigers (c) ist ebenfalls nicht kritisch, vorausgesetzt, dass eine ausreichende Menge vorliegt, um den Beschleunigungseffekt zur erhalten. Im allgemeinen beträgt die Menge 0,1 bis 10 Gew.-% Härtungsbeschleuniger, vorzugsweise 0,5 bis 5 Gew.-% bezogen aus die Menge Epoxidharz (a).

Bei der Durchführung des erfindungsgemässen Verfahrens werden die härtbaren Gemische in üblicher Weise auf eine oder beide Oberflächen appliziert, die dann nach bekannter Art zusammengefügt werden. Durch Erhitzen verfestigt sich das die Verklebung darstellende härtbare Gemisch. Zur Verfestigung ist eine Temperatur im Bereich von 150—220°C, vorzugsweise von 175—200°C, geeignet, um eine Verfestigung innerhalb von 5 Sekungen bis 10 Minuten, vorzugsweise 10 Sekunden bis 5 Minuten, zu erreichen.

Das erfindungsgemässe Verfahren kann zum Verkleben von Metallflächen, wie Stahl oder Aluminium, verstärkten Kunststoffen, Glas, Reibungsmaterial, wie beispielsweise Bremsbeläge, oder Keramikmaterial verwendet werden. Vorzugsweise eignet sind das Verfahren zum Verkleben von Metallflächen.

Zur Verbesserung der physikalischen oder chemischen Eigenschaften können der härtbaren Gemischen geeignete Zusatzmittel zugegeben werden, zum Beispiel Pigmente, Farbstoff, Flexibilisatoren, Weichmacher, Füllstofe, Thixotropiermittel und flammhemmende Stoffe.

In den folgenden Beispielen wird die Erfingung näher beschrieben. Teile bedeuten Gewichtsteile. Die in den Beispielen verwendeten Beschleuniger werden wie folgt hergetellt.

Beschleuniger I

10 g Novolak, hergestellt aus Phenol und Formaldehyd im Molverhältnis von 1:0,89 und mit einem Schmelzbereich von 70—90°C, wird mit 4,2 g Benzyldimethylamin gemischt, langsam auf 150°C erhitzt und 1/2 Stunde bei dieser Temperatur gehalten. Danach wird die Mischung in Aluminiumbehälter gegossen und nach dem Erkalten wird die braune, spröde Substanz zu einem Pulver vermahlen.

Beschleuniger II

Das Verfahren zur Herstellung von Beschleuniger I wird wiederholt, und das verwendete Amin wird durch 4,5 g N-Aminoethylpiperazin ersetzt. Beschleuniger II ist eine braune, spröde Festsubstanz, die zu einem Pulver vermahlen wird.

Beschleuniger III

10 g Novolak, hergestellt aus Bisphenol A und Formaldehyd im Molverhältnis von 1:0,85 und mit einem Schmelzbereich von 125—132°C, werden mit 3,7 g Benzyldimethylamin gemischt, langsam auf 150°C erhitzt und noch 1/2 Stunde bei dieser Temperatur belassen. Danach wird die Mischung in Aluminiumbehälter gegossen und abgekühlt. Die erkaltete braune, spröde Festsubstanz wird zu einem Pulver vermahlen.

Beschleuniger IV

40 g Novolak, hergestellt aus Phenol und Formaldehyd im Molverhältnis von 1:0,89 und mit einem Schmelzbereich von 70—90°C, werden bei 110°C geschmolzen und unter Rühren gibt man zur Schmelze portionenweise 20 g 2-Phenylimidazol hinzu. Dann wird die Temperatur auf 150°C erhöht und während 15 Minuten gehalten. Die klare Schmelze wird dann in Aluminumbehälter gegossen und nach dem Verfestigen zu einem feinen Pulver vermahlen.

Beschleuniger V

150 g des zur Herstellung von Beschleuniger IV verwendeten Novolaks werden in 200 ml Methanol bei 50°C gelöst und unter Rühren gibt man 75 g Benzimidazol hinzu. Die Mischung wird weitere 15 Minuten bei 50°C gerührt. Das Methanol wird destillativ unter Normaldruck entfernt, wobei die Temperatur im Reaktionsgefäss langsam auf 160°C angehoben wird, und die letzten Spuren Methanol werden bei 533,2 mbar/160°C entfernt. Das Reaktionsgemisch wird weitere 90 Minuten auf 160°C gehalten und dann in Aluminiumbehälter gegossen. Die erhaltene spröde Festsubstanz wird zu einem feinen Pulver vermahlen.

Beschleuniger VI

120 g des zur Herstellung von Beschleuniger IV verwendeten Novolaks werden in 200 ml Methanol bei 50°C gelöst und unter Rühren werden tropfenweise 90 g 2-(Dimethylaminomethyl)-phenol zugegeben. Diese Mischung wird für weitere 15 Minuten bei 50°C gerührt. Das Methanol wird destillativ unter Normaldruck entfernt und danach wird die Temperatur im Reaktionsgefäss auf 140°C gebracht. Die letztgen Spuren an Methanol werden bei 533,2 mbar/140°C entfernt, indem die Mischung 30 Minuten unter diesen Bedingungen belassen wird. Die heisse Mischung wird in Aluminiumbehälter gegossen, und nach dem Abkühlen wird die erhaltene spröde Festsubstanz zu einem feinen Pulver vermahlen.

Beschleuniger VII

100 g Novolak, hergestellt aus p-tert.-Butylphenol und Formaldehyd, mit einem durchschnittlichen

Molekulargewicht von 812 und einem Schmelzpunkt von 112°C werden in 200 ml Methanol gelöst und mit 55,5 g 2,4,6-Tris-(dimethylaminomethyl)-phenol analog der Arbeitsweise für Beschleuniger VI versehen. Die erhaltene spröde, gelbe Festsubstanz wird zu einem feinen Pulver vermahlen.

Beschleuniger VIII

12 g Novolak, hergestellt aus Bisphenol A und Formaldehyd im Molverhältnis von 1:0,46 und mit einem Schmelzpunkt von 90°C, werden mit 6,7 g 2,4,6-Tris(dimethylaminomethyl)phenol gemischt, wobei eine Aufschlämmung erhalten wird. Diese wird unter Rühren auf 140°C erhitzt, wobei der Novolak sich in 2,4,6-Tris-(dimethylaminomethyl)phenol zu einer klaren Schmelze löst. Diese wird für weitere 15 Minuten auf 140°C gehalten und dann aus Aluminiumbehälter gegossen. Die erhaltene spröde, leicht gelbe Festsubstanz wird zu einem feinen Pulver vermahlen.

Beschleuniger IX

72 g Novolak, hergestellt aus Phenol und Formaldehyd im Molverhältnis von 1:0,89 und mit einem Schmelzbereich von 70—90°C, werden mit 32 g 2-Methylimidazol gemischt und langsam auf 140°C erhitzt. Nach weiteren 30 Minuten bei dieser Temperatur wird die Schmelze in Aluminiumbehälter gegossen, und die erhaltene braune spröde Masse wird zu einem feinen Pulver vermahlen.

Beschleuniger X

4,89 g Novolak, hergestellt aus p-tert.-Butylphenol und Formaldehyd und mit einem durchschnittlichen Molekulargewicht von 1253 und einem Schmelzpunkt von 139°C, werden mit 1,35 g Benzyldimethylamin langsam auf 150°C erhitzt und 10 Minuten bei dieser Temperatur belassen. Dann wird die Schmelze in einen Aluminiumbehälter gegossen und nach dem Abkühlen wird die gelbe, spröde Festsubstanz zu einem Pulver vermahlen.

Stabilitäts- und Härtungstests

Test 1

100 Teile Bisphenol A-diglycidylether mit einem Epoxidgehalt von 5,2 Aequivalenten/kg werden mit 7,5 Teilen Dicyandiamid, 5,0 Teilen hochdispersem Siliciumdioxid und 3,4 Teilen Beschleuniger I gemischt. Bei 40°C ist diese Mischung während 12 Wochen lagerstabil. Eine Probe der Mischung wird auf eine auf 180°C erhitzte Heizplatte aufgebracht, wobei innerhalb von 2,2 Minuten Verfestigung eintritt. Wenn eine 2 mm dicke Schicht dieser Mischung, die zusätzlich 60 Teile Talk enthält, rasch auf 200°C erhitzt wird, sind keine Anzeichen einer Blasenbildung ersichtlich.

Test 2

Test 1 wird unter Verwendung von 6,8 Teilen Beschleuniger I wiederholt. Verfestigung tritt innerhalb von 1 Minute ein und bei 40°C ist die Mischung über 12 Wochen lagerstabil.

Test 3

Test 1 wird wiederholt, wobei der Beschleuniger durch 4,0 Teile Beschleuniger II ersetzt wird. Bei 180°C tritt Verfestigung der Mischung innerhalb von 3,6 Minuten ein und bei 40°C ist die Mischung über 4,5 Monate lagerstabil.

Test 4

Test 1 wird wiederholt, wobei der Beschleuniger durch 4,7 Teile Beschleuniger III ersetzt wird. Bei 180°C verfestigt sich die Mischung innerhalb von 0,6 Minuten und ist bei 40°C für 2—3 Wochen und bei 23°C über 6 Wochen lagerstabil.

Test 5

100 Teile des im Test 1 verwendeten Epoxidharzes werden mit 25,2 Teilen Isophthalsäuredihydrazid und 5,6 Teilen Beschleuniger I gemischt. Eine Probe dieser Mischung wird auf eine auf 180°C erhitzte Heizplatte aufgebracht, wobei innerhalb von 0,7 Minuten Verfestigung eintritt. Bei 40°C ist diese Mischung 3—4 Monate lagerstabil.

Test 6

Test 5 wird wiederholt, wobei der Beschleuniger durch 3,0 Teile Beschleuniger Versetzt wird. Bei 180°C verfestigt sich die Mischung innerhalb 1,0 Minuten, und bei 40°C ist die Mischung für 6—7 Tage lagerstabil. Wenn eine 2 mm dicke Schicht aus dieser Mischung, die zusätzlich 60 Teile Talk enthält, rasch auf 200°C erhitzt wird, sind keine Anzeichen einer Blasenbildung ersichtlich.

Test 7

Test 1 wird wiederholt, wobei der dort eingesetzte Beschleuniger durch 4,6 Teile Beschleuniger VI ersetzt wird. Bei 180°C verfestigt sich die Mischung innerhalb 0,9 Minuten, und bei 40°C ist diese mehr als 5 Wochen lagerstabil. Wenn eine 2 mm dicke Schicht aus dieser Mischung, die zusätzlich 60 Teile Talk enthält, rasch auf 200°C erhitzt wird, sind keine Anzeichen einer Blasenbildung vorhanden.

Test 8

Test 1 wird wiederholt, wobei der dort eingesetzte Beschleuniger durch 2,8 Teile Beschleuniger VII ersetzt wird. Bei 180°C verfestigt sich die Mischung innerhalb 0,7 Minuten, und bei 40°C ist diese für 8—9 Tage lagerstabil. Wenn eine 2 mm dicke Schicht aus dieser Mischung, die zusätzlich 60 Teile Talk enthält, rasch auf 200°C erhitzt wird, erkennt man keine Anzeichen einer Blasenbildung.

Test 9

Test 1 wird wiederholt, indem der dort verwendete Beschleuniger durch 3,2 Teile Beschleuniger IX ersetzt wird. Bei 180°C verfestigt sich die Mischung innerhalb 0,5 Minuten, und bei 40°C ist diese Mischung mehr als 5 Wochen lagerstabil. Wenn eine 2 mm dicke Schicht aus dieser Mischung, die zusätzlich 60 Teile Talk enthält, rasch auf 200°C erhitzt wird, ergeben sich keine Anzeichen einer Blasenbildung.

Test 10

Test 1 wird wiederholt, wobei der dort verwendete Beschleuniger durch 4,0 Teile Beschleuniger X ersetzt wird. Bei 180°C verfestigt sich die Mischung, und bei 40°C ist die Mischung während 4 Wochen lagerstabil. Wenn eine 2 mm dicke Schicht dieser Mischung, die zusätzlich 60 Teile Talk enthält, rasch auf 200°C erhitzt sind keine Anzeichen einer Blasenbildung erkennbar.

Test 11

Test 1 wird wiederholt, indem das verwendete Dicyandiamid durch 23,1 Teil Adipinsäuredihydrazid und der Beschleuniger durch 3,0 Teile Beschleuniger V ersetzt werden. Bei 180°C verfestigt sich die Mischung innerhalb von 0,8 Minuten, und bei 40°C ist die Mischung während 4 Wochen lagerstabil. Wenn eine 2 mm dicke Schicht dieser Mischung, die ausserdem noch 60 Teile Talk enthält, schnell auf 200°C erhitzt wird, sind Anzeichen einer Blasenbildung nicht ersichtbar.

Test 12

Test 11 wird wiederholt, indem der verwendete Beschleuniger durch 2,8 Teile Beschleuniger VIII ersetzt wird. Bei 180°C verfestigt sich die Mischung innerhalb 0,8 Minuten, und bei 40°C ist die Mischung mehr als 5 Wochen lagerstabil. Wenn eine 2 mm dicke Schicht dieser Mischung, die zusätzlich noch 60 Teile Talk enthält, schnell auf 200°C erhitzt wird, sind Anzeichen einer Blasenbildung nicht ersichtbar.

Beispiel 1

Eine Mischung wird hergestellt aus:

| | |
|---|---|
| Epoxidharz | 100 Teile |
| Dicyandiamid | 7,5 Teile |
| hochdispersem Siliciumdioxid | 5,0 Teile |
| Mikroglaskugeln | 1,0 Teile |
| Beschleuniger I | 6,8 Teile |

Das verwendete Epoxidharz ist ein Bisphenol A-diglycidylether mit einem Epoxidgehalt von 5,2 Aequivalenten/kg. Die Mikroglaskugeln werden zwecks Kontrolle der Leimschichtdicke zugegeben.

Die Mischung wird auf entfettete, sandgestrahlte Strahlbleche aufgetragen und überlappte Verklebungen mit einem überlappenden Anteil von 645 $mm^2$ werden hergestellt. Die Härtung wird bei 200°C während 5 Minuten durchgeführt, dann wird die Verklebung auf Raumtemperatur abgekühlt. Die Scherfestigkeit der Verklebung beträgt 16,7 MPa.

Beispiel 2

Beispiel 1 wird wiederholt, indem Dicyandiamid durch 25,2 Teile Isophthalsäuredihydrazid ersetzt wird. Die Scherfestigkeit der Verklebung beträgt 1,53 MPa.

Beispiel 3

Beispiel 1 wird wiederholt, indem der Beschleuniger durch 4,6 Teile Beschleungier VI ersetzt wird. Die Scherfestigkeit der Verklebung beträgt 16,8 MPa.

Beispiel 4

Beispiel 1 wird wiederholt, indem der verwendete Beschleuniger durch 2,1 Teile Beschleungier VII ersetzt wird und die Härtung während 10 Minuten bei 180°C vorgenommen wird. Die Scherfestigkeit der Verklebung beträgt 17,0 MPa.

### Beispiel 5

Beispiel 4 wird wiederholt, indem der verwendete Beschleuniger durch 4,0 Teile Beschleuniger X ersetzt wird. Die Scherfestigkeit der Verklebung beträgt 17,1 MPa.

### Beispiel 6

Beispiel 4 wird wiederholt, indem Dicyandiamid durch 25,2 Teile Isophthalsäuredihydrazid und der verwendete Beschleuniger durch 3,0 Teile Beschleuniger IV ersetzt werden. Die Scherfestigkeit der Verklebung beträgt 14,0 MPa.

### Beispiel 7

Beispiel 4 wird widerholt, indem der verwendete Beschleuniger durch 3,2 Teile Beschleuniger IX ersetzt wird. Die Scherfestigkeit der Verklebung beträgt 16,0 MPa.

### Beispiel 8

Beispiel 1 wird wiederholt, indem Dicyandiamid durch 23,1 Teile Adipinsäuredihydrazid und der verwendete Beschleuniger durch 3,0 Teile Beschleuniger V ersetzt werden. Die Verklebung weist eine Scherfestigkeit von 15,5 MPa auf.

### Beispiel 9

Beispiel 8 wird wiederholt, wobei der verwendete Beschleuniger durch 2,8 Teile Beschleuniger VIII ersetzt wird. Die Verklebung weist eine Scherfestigkeit von 15,9 MPa auf.

**Patentansprüche**

1. Verfahren zum Verkleben zweier Oberflächen aus Metall, verstärktem Kunststoff, Glas, Reibungsmaterial oder Keramik, dadurch gekennzeichnet, dass man

(1) auf eine oder beide Oberflächen ein härtbares Gemisch aufbringt, das enthält

(a) ein Epoxidharz,

(b) ein Stickstoff enthaltendes latentes Härtungsmittel für Epoxidharz und

(c) als Härtungsbeschleuniger eine feste Lösung aus einer Stickstoffbase mit einem Siedepunkt von über 130°C und einem phenolischen Polymer, welches eine Kondensationsprodukt aus einem Phenol und einem Aldehyd ist, wobei die feste Lösung als Pulver in der Mischung aus (a) und (b) dispergiert vorliegt,

(2) die beiden Oberflächen so aneinanderfügt, dass das härtbare Gemisch dazwischen liegt und ein Gebilde ergibt, und

(3) das Gebilde erhitzt, bis das härtbare Gemisch sich verfestigt hat.

2. Verfahren gemäss Anspuch 1, worin das Epoxidharz (a) flüssig ist und ein Polyglycidylether, Polyglycidylester, N,N'-Diglycidylhydantoin oder ein Poly-(N-glycidyl)-derivat eines aromatischen Amins ist.

3. Verfahren gemäss Anspuch 1 oder 2, worin das Härtungsmittel (b) ein Bortrichlorid/Amin- oder Bortrifluorid/Amin-Komplex, Dicyandiamid, Melamin, Diallylmelamin, ein Guanamin, ein Aminotriazol, ein Hydrazid, Semicarbazol, Cyanoacetamid oder ein aromatisches Polyamin ist.

4. Verfahren gemäss Anspuch 3, worin das Härtungsmittel (b) Dicyandiamid, Isophthalssäuredihydrazid oder Adipinsäure ist.

5. Verfahren nach einem der vorangehenden Ansprüche, worin die feste Lösung (c) aus einer Stickstoffbase und einem Novolak, hergestellt aus einem Phenol und einem Aldehyd, als phenolisches Polymer besteht.

6. Verfahren gemäss Anspruch 5, worin der Novolak der allgemeinen Formel II

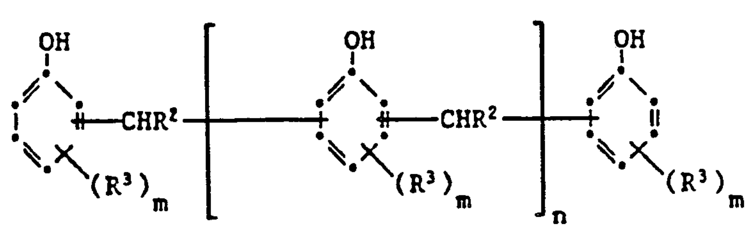 (II),

entspricht, worin

$R^2$ ein Wassestoffatom, Alkyl, Aryl odr einen Heterocyclus bedeutet,

$R^3$ ein Halogenatom, Hydroxy, Alkyl, Alkoxy, Aryl, Aralkyl oder Hydroaralkyl bedeutet,

m für Null oder eine Zahl von 1 bis 3 steht und

n eine solche Zahl darstellt, dass der Durchschnittswert zwischen 1 bis 15 liegt.

7. Verfahren gemäss Anspuch 6, worin in Formel II

$R^2$ für ein Wasserstoffatom steht,

$R^3$ ein Alkyl oder Hydroxyaralkyl bedeutet und

m für Null oder die Zahl 1 steht.

8. Verfahren gemäss einem der vorangehenden Ansprüche, worin die Stickstoffbase in der festen Lösung (c) ein tertiäres Monoamin, sekundäres Monoamin, primäres Diamin, sekundäres Diamin, tertiäres Diamin, tertiäres Triamin, gemischtes Polyamin oder ein N-Heterocyclus ist.

9. Verfahren gemäss Anspuch 8, worin die Stickstoffbase einen Siedepunkt von über 150°C aufweist.

10. Verfahren gemäss Anspuch 9, worin die Stickstoffbase Benzyldimethylamin, 2-(Dimethylaminomethyl)-phenol, 2,4,6-Tris-(dimethylaminomethyl)-phenol, 2-Methylimidazol, Benzimidazol, 2-Phenylimidazol oder N-(2-Aminomethyl)-piperazin ist.

11. Verfahren gemäss einem der vorangehenden Ansprüche, worin das Gewichtsverhältnis von phenolischem Polymer zur Stickstoffbase in der festen Lösung (c) im Bereich von 0,8—4,0:1 ist.

12. Verfahren gemäss einem der vorangehenden Ansprüche, worin die beiden Oberflächen aus Metall bestehen.

**Revendications**

1. Procédé pour coller deux surfaces en métal, en matière plastique armée, en verre, en matériau de friction ou en céramique, procédé caractérisé en ce que

(1) on applique sur une des surfaces, ou sur les deux surfaces, un mélange durcissable contenant:

(a) une résine époxyde,

(b) un durcisseur latent, contenant de l'azote, pour les résines époxydes, et

(c) comme accélérateur de durcissement, une solution solide d'une base azotée ayant un point d'ébullition supérieur à 130°C et d'un polymère phénolique, qui est un produit de condensation d'un phénol et d'un aldéhyde, la solution solide étant présente sous forme de poudre, en dispersion dans le mélange de (a) et de (b); (2) on réunit les deux surfaces de manière que le mélange durcissable se situe entre elles, et l'on obtient un objet, et

(3) on chauffe cet objet jusqu'à solidification du mélange durcissable.

2. Procédé selon la revendication 1, dans lequel la résine époxyde (a) est liquide et est un éther polyglycidylique, un ester polyglycidylique, une N,N'-diglycidylhydantoïne ou un dérivé poly(N-glycidylique) d'une amine aromatique.

3. Procédé selon la revendication 1 ou 2, dans lequel le durcisseur (b) est un complexe de trichlorure de bore/amine ou un complex de trifluorure de bore/amine, du dicyanodiamide, de la mélamine, de la diallylmélamine, une guanamine, un aminotriazole, un hydrazide, un semicarbazole, un cyanoacétamide ou une polyamine aromatique.

4. Procédé selon la revendication 3, dans lequel le durcisseur (b) est du dicyanodiamide, le dihydrazide de l'acide isophtalique ou l'acide adipique.

5. Procédé selon l'une des revendications précédentes, dand lequel la solution solide (c) consiste en une base azotée et en une novolaque, préparée à partir d'un phénol et d'un aldéhyde, comme polymère phénolique.

6. Procédé selon la revendication 5, dans lequel la novolaque répond à la formule générale II

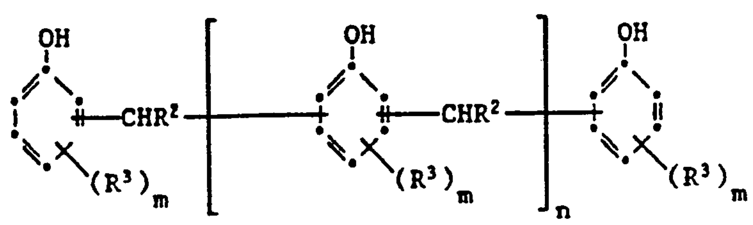

(II),

dans laquelle

$R^2$ représente un atome d'hydrogène ou un groupe alkyle ou aryle ou un hétérocycle,

$R^3$ représente un atome d'halogène, un groupe hydroxyle, alkyle, alcoxy, aryle, aralkyle ou hydroxyaralkyle,

m est nul ou représente un nombre valant 1 à 3, et n est un nombre tel que sa valeur moyenne se situe entre 1 et 15.

7. Procédé selon la revendication 6 dans lequel dans la formule II,

$R^2$ représente un atome d'hydrogène,

$R^3$ représente un groupe alkyle ou hydroxyaralkyle, et

m est nul ou vaut 1.

8. Procédé selon l'une des revendications précédentes, dans lequel, dans la solution solide (c), la base azotée est une monamine tertiaire, une monoamine secondaire, une diamine primaire, une diamine secondaire, une diamine tertiaire, une triamine tertiaire, une polyamine mixte ou un hétérocycle azoté.

9. Procédé selon la revendication 8, dans lequel la base azotée présente un point d'ébullition supérieur à 150°C.

10. Procédé selon la revendication 9, dans lequel la base azotée est la benzylidiméthylamine, le (diméthylaminométhyl)-2 phénol, le tris-(diméthylaminométhyl)-2,4,6 phénol, le méthyl-2 imidazole, le benzimidazole, le phényl-2 imidazole ou la N-(aminométhyl-2)pipérazine.

11. Procédé selon l'une des revendications précédentes, dans lequel le rapport pondéral du polymère phénolique à la base azotée se situe, dans la solution solide (c), entre 0,8 et 4,0:1.

12. Procédé selon l'une des revendications précédentes, dans lequel les deux surfaces consistent en du métal.

**Claims**

1. A method of bonding two surfaces of metal, reinforced plastics, glass, friction material or ceramics, which comprises

(1) applying to one or both surfaces a curable composition which contains

(a) an epoxy resin,

(b) a nitrogen-containing latent curing agent for epoxy resins and

(c) as curing accelerator a solid solution of a nitrogen base having a boiling point above 130°C and a phenolic polymer which is a condensation product of a phenol and an aldehyde, the solid solution being present as a powder dispersed in the mixture of (a) and (b),

(2) placing the two surfaces together such that the curable composition is positioned therebetween and forms an assembly, and

(3) heating the assembly until the curable composition solidifies.

2. A method according to claim 1, wherein the epoxy resin (a) is liquid and is a polyglycidyl ether, polyglycidyl ester, N,N'-diglycidylhydantoin or a poly-(N-glycidyl) derivative of an aromatic amine.

3. A method according to claim 1 or 2, wherein the curing agent (b) is a boron trichloride/amine complex or a boron trifluoride/amine complex, dicyandiamide, melamine, diallylmelamine, a guanamine, an aminotriazole, a hydrazide, semicarbazole, cyanoacetamide or an aromatic polyamine.

4. A method according to claim 3, wherein the curing agent (b) is dicyandiamide, isophthalic acid dihydrazide or adipic acid.

5. A method according to any one of the preceding claims, wherein the solid solution (c) of a nitrogen base and a novolak, prepared from a phenol and an aldehyde, is in the form of a phenolic polymer.

6. A method according to claim 5, wherein the novolak corresponds to the general formula II

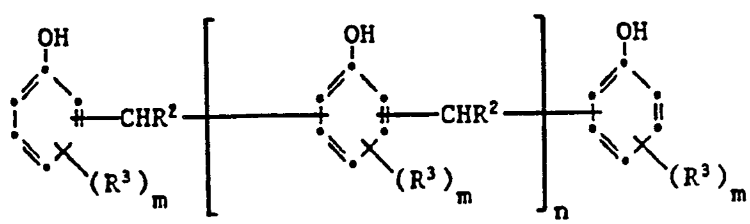

(II),

wherein

$R^2$ is a hydrogen atom, alkyl, aryl or a heterocycle,

$R^3$ is a halogen atom, hydroxyl, alkyl, alkoxy, aryl aralkyl or hydroaralkyl,

m is zero or a number from 1 to 3 and

n is a number such that the average value is between 1 and 15.

7. A method according to claim 6, wherein in formula II

$R^2$ is a hydrogen atom,

$R^3$ is an alkyl or hydroxyaralkyl and

m is zero or the number 1.

8. A method according to any one of the preceding claims, wherein the nitrogen base in the solid solution (c) is a tertiary monoamine, secondary monamine, primary diamine, secondary diamine, tertiary diamine, tertiary triamine, mixing polyamine or a nitrogen heterocycle.

9. A method according to claim 8, wherein the nitrogen base has a boiling point above 150°C.

10. A method according to claim 9, wherein the nitrogen base is benzyldimethylamine, 2-(dimethylaminomethyl)phenol, 2,4,6-tris(dimethylaminomethyl)phenol, 2-methylimidazole, benzimidazole, 2-phenylimidazole or N-(2-aminomethyl)piperazine.

11. A method according to any one of the preceding claims, wherein the weight ratio of phenolic polymer to nitrogen base in the solid solution (c) is within the range 0.8—4.0:1.

12. A method according to any one of the preceding claims, wherein the two surfaces are of metal.